# EUROPÄISCHE PATENTANMELDUNG

(11) **EP 0 535 419 A1**
(43) Veröffentlichungstag der Anmeldung: **07.04.1993**
(21) Anmeldenummer: 92115498.5
(22) Anmeldetag: 10.09.1992
(51) Int. Cl.: C08J 11/06, B03D 1/02

(54) **Verfahren zur Trennung von Kunststoffen durch Flotation**

(30) Priorität: 14.09.1991 DE 4130709
(71) Anmelder: HOECHST AKTIENGESELLSCHAFT, D-65926 Frankfurt am Main (DE)
(72) Erfinder: Deiringer, Günther, Dr., W-8261 Kastl (DE); Edelmann, Gerhard, Dr., W-6238 Hofheim (Ts.) (DE); Rauxloh, Bernhard, W-6930 Eberbach (DE)

(57) **Zusammenfassung**

Die Erfindung betrifft ein Verfahren zum Abtrennen von Kunststoffen aus Polyester aus einem Gemisch von Kunststoffen aus Polyester, Polyvinylchlorid und gegebenenfalls anderen Kunststoffen, dadurch gekennzeichnet, daß das Gemisch der Kunststoffe mit einer wäßrig alkalischen Lösung behandelt wird und der Polyester von Polyvinylchlorid und gegebenenfalls anderen Kunststoffen durch Flotation abgetrennt wird.

## Beschreibung

Die Erfindung betrifft ein Verfahren zum Abtrennen von Kunststoffen aus Polyester aus einem Gemisch von Kunststoffen aus Polyester, Polyvinylchlorid und gegebenenfalls anderen Kunststoffen durch Flotation.

Das Bemühen, den Müllanfall durch Wiederverwertung von im Müll enthaltenden Kunststoffen zu verringern, hat zur Entwicklung von verschiedenen, meist physikalischen Trennverfahren geführt.

Es sind eine Reihe von Verfahren bekannt, bei denen Kunststoffe unterschiedlicher Dichte getrennt werden können, so z. B. die Trennung von Kunststoffen mittels Schwimm-Sinkverfahren oder mittels Zyklonen/Hydrozyklonen (Albert Behr, Erzmetall 33 (1980), S. 324-330). Diese Verfahren versagen aber bei Gemischen von Kunststoffen, die eine annähernd gleiche Dichte besitzen, wie z. B. Kunststoffen aus Polyester und Polyvinylchlorid. Gerade an der Sortierung von Kunststoffen aus Polyester und Polyvinylchlorid besteht ein großes Interesse, da bei der zu erwartenden Sammlung von Kunststoffen diese möglichst sortenrein getrennt werden müssen um das Material einem hochwertigen Wiedereinsatz zuführen zu können.

Für die Trennung von Kunststoffen aus Polyester und Polyvinylchlorid sind einige Verfahren bekannt.

Das sogenannte Heißwalzenverfahren (Modern Plastics, June 1990, S. 15-22) versagt allerdings bei Kunststoffen aus amorphem Polyester, da diese unter Betriebsbedingungen in einem ähnlichen Temperaturbereich erweichen wie Polyvinylchlorid.

Aus der FR-A-2 643 011 ist ein Mal- und Siebverfahren bekannt, bei dem das unterschiedliche Bruchverhalten von Kunststoffen zu einer Anreicherung eines Kunststoffes, z. B. in der Grobfraktion, aber nicht zur vollständigen Trennung führt. Eine unvollständige Trennung führt aber zu schlechten Materialeigenschaften im recyclierten Kunststoff. So führt ein Gehalt von 1 % Polyvinylchlorid im Polyester bereits zur Dunkelfärbung und Versprödung daraus hergestellter Produkte, weil Polyvinylchlorid bei der Verarbeitungstemperatur des Polyesters, die oberhalb 260 °C liegt, verbrennt. Andererseits führt ein geringer Anteil von Polyester in Polyvinylchlorid zu Fehlstellen im recyclierten Kunststoff, da bei der Verarbeitungstemperatur des Polyvinylchlorids der enthaltene Polyesteranteil nicht schmilzt und damit keinen Verbund eingeht.

Eine Trennung von Kunststoffen aus Polyester und Polyvinylchlorid nach Detektion des Polyvinylchlorids mit Röntgenstrahlen (EP-A-0 291 959) ist zwar möglich, aber nur sinnvoll, wenn die zu sortierenden Teile eine Mindestgröße, wie die von Getränkeflaschen nicht unterschreiten, da sonst der apparative Aufwand zu hoch wird.

Aus DE-A-25 11 347 ist zwar ein Verfahren zum Trennen eines Gemisches eines Polystyrols und eines Polyolefins wie Polyethylen und Polypropylen oder eines Gemisches von Polyethylen und Polypropylen durch Flotation bekannt, ein Verfahren zum Trennen eines Gemisches von Kunststoffen aus Polyester, Polyvinylchlorid und gegebenenfalls anderen Kunststoffen durch Flotation ist jedoch nicht bekannt.

Überraschenderweise wurde gefunden, daß Kunststoffe aus Polyester aus einem Gemisch von Kunststoffen aus Polyester, Polyvinylchlorid und gegebenenfalls anderen Kunststoffen leicht abzutrennen sind, wenn das Kunststoffgemisch vor der Flotation mit wäßriger, alkalischer Lösung behandelt wird.

Gegenstand der Erfindung ist ein Verfahren zum Abtrennen von Kunststoffen aus Polyester aus einem Gemisch von Kunststoffen aus Polyester, Polyvinylchlorid und gegebenenfalls anderen Kunststoffen das dadurch gekennzeichnet ist, daß das Gemisch der Kunststoffe mit einer wäßrig alkalischen Lösung behandelt wird und der Polyester von Polyvinylchlorid und gegebenenfalls anderen Kunststoffen durch Flotation abgetrennt wird.

Unter Verwendung eines Gemisches von Kunststoffen aus Polyester, Polyvinylchlorid und gegebenenfalls anderen Kunststoffen läßt sich die Oberfläche des Polyesters in wäßriger, alkalischer Lösung hydrophiler einstellen als diejenige der anderen Kunststoffe. Bei der anschließenden Flotation wird der Polyester als Rückstand gewonnen, während die anderen Kunststoffe an die Oberfläche der Flüssigkeit flotiert werden (umgekehrte Flotation).
Die Polyester, die erfindungsgemäß abgetrennt werden können, umfassen z. B. Kunststoffe aus Polyethylentherephthalat, Polybutylenterephthalat, säuremodifizierten Polyestern und glykolmodifizierten Polyestern, wie Kodar® PETG (Hersteller: Kodak-Pathe, Paris). Geeignete andere Kunststoffe sind z.B. Kunststoffe aus Polystyrol, Polyäthylen oder Polypropylen.
Bei den eingesetzten Kunststoffen handelt es sich um die vorstehend genannten Kunststoffsorten, die durch Zerkleinern in eine flotationsfähige Form gebracht werden. Dabei spielt die Herkunft der eingesetzten Kunststoffe keine Rolle. So können z.B. Folien, Fasern, Kabel, Vliese, Gewirke oder auch Formteile, wie Flaschen, verwendet werden.
Die Große und die Form der eingesetzten Kunststoffteile ist nicht besonders begrenzt, aus Gründen der Handhabung ist die Größe der eingesetzten Kunststoffe bei etwa 20 mm oder weniger, bevorzugt bei etwa 5-10 mm. Diese Größe der eingesetzten Kunststoffe wird dadurch erreicht, daß die vorstehend genannten Kunststoffe durch übliche Zerkleinerungsverfahren, wie Häckseln, Zerschneiden, Zerhacken oder Zerreißen, in Kunststoffteile der vorstehend genannten Größe überführt werden und gegebenenfalls auch als Granulate oder Schnitzel zur Flotation eingesetzt werden.

Das Gemisch der Kunststoffe aus Polyester, Polyvinylchlorid und gegebenenfalls anderen Kunststoffen wird vor der Flotation in einer vorgeschalteten Konditionierungsstufe mit einer wäßrig alkalischen Lösung behandelt. Dabei läßt man die wäßrig alkalische Lösung auf das Gemisch der Kunststoffe über einen Zeitraum von etwa 2 Minuten bis 15 Minuten einwirken, gegebenenfalls unter Rühren. Dabei hat sich gezeigt, daß die Einwirkzeit einer 10 gew.-%igen wäßrig alkalischen Lösung im Bereich von 5 bis 15 Minuten liegt. Die wäßrig alkalische Lösung wird im allgemeinen bei Raumtemperatur, beispielsweise bei 20 bis 30°C oder als warme Lösung, beispielsweise von 30 bis 60°C verwendet. Bei dem Vorgang des Konditionierens ist darauf zu achten, daß die eingesetzten Kunststoffteile mit wäßrig alkalischer Lösung bedeckt sind.

Als wäßrig alkalische Lösungen finden vor allem Lösungen von Erdalkali- oder Alkalioxiden, -hydroxiden, -carbonaten und -bicarbonaten Verwendung. Bevorzugt werden Lösungen von Alkalihydroxiden, besonders bevorzugt Natriumhydroxidlösungen verwendet.
Die wäßrig alkalische Lösung wird in Form einer mindestens 2 gew.- %igen, bevorzugt 10 gew- %igen Lösung eingesetzt.

Es hat sich gezeicht, daß es von Vorteil ist, bei der Trennung von bestimmten Polyethylenterephthalat (PET)-Sorten, wie PET-A (Flaschenrohstoffe), von Polyvinylchlorid (PVC) und gegebenenfalls anderen Kunststoffen, der wäßrig alkalischen Lösung eine gewisse Menge eines organischen Lösungsmittels zuzusetzen.

Geeignete organische Lösungsmittel sind einwertige und mehrwertige aliphatische Alkohole, wie Methanol, Ethanol, Ethylenglykol, Diethylenglykol und Glycerin und Glykolether, wie Ethylenglykolmonoethylether. Bevorzugte Verwendung finden Methanol und Ethylenglykolmonoethylether.

Die vorstehend genannten Lösungsmittel können einzeln oder in Mischung zugesetzt werden und sind üblicherweise in einer Menge von 1-70 Gew.-%, bevorzugt 5-50 Gew.-%, besonders bevorzugt 10-20 Gew.-%, bezogen auf das Gewicht der wäßrig alkalischen Lösung, vorhanden.

In Abhängigkeit von der zugesetzten Menge an organischem Lösungsmittel werden unterschiedliche Einwirkzeiten erhalten. Bei dem Einsatz einer 10-20 gew.-%igen wäßrigen Natronlauge, enthaltend 20 Gew.-% Methanol, beträgt die Einwirkzeit ungefähr 30 Minuten. Im allgemeinen ist durch Zusatz eines organischen Lösungsmittels zu der wäßrig alkalischen Lösung eine längere Einwirkzeit erforderlich.

Der Anteil der Kunststoffe in der wäßrig alkalischen Lösung beträgt von etwa 1 bis 30 Gew.-Teilen, vorzugsweise 5 bis 15 Gew.-Teilen, bezogen auf 100 Gewichtsteile der wäßrig alkalischen Lösung.
Das Verhältnis der Anteile an Polyester zu Polyvinylchlorid und zu gegebenenfalls anderen Kunststoffen liegt im Bereich von 1-99 Gew.-% Polyester zu 99-1 Gew.-% Polyvinylchlorid zu 0-98 Gew.-% anderen Kunststoffen.

Im Anschluß an die Behandlung mit wäßrig alkalischer Lösung empfiehlt es sich, das Gemisch der Kunststoffe aus der wäßrig alkalischen Lösung zu entfernen, z. B. durch Absieben, um den Verbrauch von wäßrig alkalischer Lösung gering zu halten und einem Verschleppen der Lösung in die Flotationszelle vorzubeugen. Nach dem Absieben wird das konditionierte Gemisch von Kunststoffen in eine Flotationszelle eingebracht. Als Flotationszellen können die aus der Erz-, Papier- und Abwasserflotation bekannten Zellen verwendet werden.
Die Kunststoffe werden in den Zellen in eine wäßrige Lösung suspendiert, wobei der Anteil der Kunststoffe von etwa 2 bis 10 Gew.-Teilen, bezogen auf 100 Gewichtsteile wäßriger Lösung, beträgt. Im allgemeinen besteht die wäßrige Lösung aus Wasser, doch kann auch Wasser verwendet werden, das Salze enthält. Beispiele für geeignete Salzwasser sind Seewasser, Sole, Bitterwasser (Magnesia enthaltendes Wasser) wie auch wäßrige Lösungen, die Halogenide und/oder Sulfate enthalten.

Dieser wäßrigen Suspension wird ein Flotationsmittel zugegeben. Bei den zugesetzten Flotationsmitteln kann es sich um Flotationsschäumer oder die Mischung eines Flotationsschäumers und eines Sammlers handeln.

Geeignete Flotationsschäumer sind aliphatische und cycloaliphatische Alkolhole mit 5 bis 10 Kohlenstoffatomen, wie 2-Ethylhexanol, Polyglykole mit einem Molekulargewicht (Gewichtsmittel) von 200 bis 500, wie Polypropylenglykol und Alkylpolyglykolether mit einem Molekulargewicht von 200 bis 500 als Umsetzungsprodukte aliphatischer C₁-C₈-Alkoholen mit C₂-C₄-α-Olefinoxiden, wie Flotanol® D14 (Hersteller: Hoechst AG).
Geeignete Sammler sind die aus der Kohleflotation bekannten hydrophoben und wasserunlöslichen Sammler. Dazu zählen natürliche Öle, wie Pflanzenöle sowie Mineralöle mit einer Kettenlänge von 8 bis 20 Kohlenstoffatomen oder auch Fettsäuren, insbesondere Carbonsäuren mit 8 bis 20 Kohlenstoffatomen.
Geeignete Mischungen setzen sich aus den oben genannten Flotationsschäumern und Sammlern zusammen, wobei das Verhältnis Flotationsschäumer zu Sammler im Bereich von 1 bis 9 zu 9 bis 1, bevozugt 1 zu 1, liegt.

Die Menge an Flotationsschäumer oder einer Mischung aus Flotationsschäumer und Sammler liegt im Bereich von 100 bis 3000 Gramm, bezogen auf eine Tonne des Kunststoffgemisches.

Nach der Zugabe des Flotationsschäumers läßt man die Suspension einige Minuten einwirken und flotiert danach. Konditionierung und Flotation werden nach an sich in der Flotationstechnik bekannten Verfahren durchgeführt.

Nach beendeter Flotation werden das Schaumprodukt (Konzentrat) und das Kammerprodukt (Rückstand) in geeigneter Weise isoliert und die Flotte dem Prozeß wieder zugeführt. Schaumprodukt und Kammerprodukt lassen sich in einfacher Weise durch Absieben oder Zentrifugieren gewinnen.

Erfindungsgemäß besteht der Rückstand aus dem abgetrennten Polyester.

Die Höhe der gegenseitigen Verunreinigungen der erhaltenen Kunststoffe bzw. Kunststoffgemische liegt bei weniger als 0,2 Gew.-%.

Die Reinheit der erhaltenen Kunststoffe läßt sich durch geeignete, zumeist analytische Verfahren überprüfen. Bei verschiedenfarbigen Kunstoffen ist die Überprüfung der Reinheit auf optischem Weg ausreichend. Bei gleichfarbigen Kunststoffen erfolgt die Überprüfung der Reinheit nach den üblichen Verfahren auf chemischem Weg, z.B durch selektives Lösen der Kunststoffe. Bei der Reinheitsbestimmung durch selektives Lösen werden Lösemittel, wie Dichloressigsäure, verwendet in denen sich nur der vorhandene Polyester löst. Damit kann der Gehalt an Polyester im Schaumprodukt und im Kammerprodukt bestimmt werden.

Die vorliegende Erfindung wird durch die nachfolgenden Beispiele erläutert.

### Beispiel 1:

Ein Gemisch von 14,5 g Polyvinylchlorid (rot eingefärbt) und 6 g Polyethylenterephthalat (farblos) in Form von Folienschnitzel in einer Größe zwischen 2 und 6 mm werden mit 100 ml einer 10 gew- %igen Natriumhydroxid-Lösung versetzt und 5 Minuten konditioniert.
Anschließend wird das Kunststoffgemisch durch Absieben aus der wäßrig alkalischen Lösung entfernt und in einer 2 l Flotationszelle, die 1900 ml Wasser enthält, suspendiert und mit 250 g des Flotationsmittels Montanol 531® (Hersteller: Hoechst AG) bezogen auf eine Tonne des Kunststoffgemisches versetzt und über einen Zeitraum von einer Minute konditioniert.
Nach der Konditionierung wird nach bekannten Verfahren flotiert.
Es werden 14,5 g eines Konzentrats erhalten und 6 g bleiben im Rückstand. Die Trennung in Polyvinylchlorid und Polyester ist praktisch vollständig. Die Überprüfung der Reinheit der verschiedenfarbigen Kunststoffe erfolgt auf optischem Weg. Die gegenseitigen Verunreinigungen sind kleiner 0,2 Gew.-%.

### Vergleichsbeispiel 1:

### Analog Beispiel 1, jedoch ohne Vorbehandlung des Kunststoffgemisches mit wäßrig alkalischer Lösung

Es findet keine Trennung statt. Das gesamte Kunststoffgemisch wird ausgetragen.

### Beispiel 2

Ein Gemisch von 14,5 g Polyvinylchlorid (rot eingefärbt) und 6 g teilamorphem Polyethylenterephthalat (PET-A, Flaschenrohstoff) (farblos) in Form von Folienschnitzel in einer Größe zwischen 2 und 6 mm werden mit 100 g einer 10 gew-%igen Natriumhydroxid-Lösung, enthaltend 15 g Methanol versetzt und 50 Minuten bei einer Temperatur von 25°C konditioniert.
Anschließend wird das Kunststoffgemisch durch Absieben aus der wäßrigalkoholischen Lösung entfernt und in einer 2,5 l Flotationszelle, die 1900 ml Wasser enthält, suspendiert und mit 5000 g des Flotationsmittels Montanol 531® (Hersteller: Hoechst AG) und 1000 g des Schäumers Flotanol ®D14, bezogen auf eine Tonne des Kunststoffgemisches versetzt und über einen Zeitraum von einer Minute konditioniert.
Nach der Konditionierung wird nach bekannten Verfahren flotiert.
Es werden 14,5 g eines Konzentrats erhalten und 6 g bleiben im Rückstand. Die Überprüfung der Reinheit der verschiedenfarbigen Kunststoffe erfolgt auf optischem Weg. Die gegenseitigen Verunreinigungen sind kleiner 0,2 Gew.-%.

### Beispiel 3:

### Analog Beispiel 1

Zur Flotation werden neben 2000 g, bezogen auf eine Tonne des Kunststoffgemisches, 2-Ethylhexanol als alkoholischer Schäumer, und 1000 g, bezogen auf eine Tonne des Kunststoffgemisches, Sonnenblumenöl verwendet. Die Trennung in Polyvinylchlorid und Polyester (Rückstand) ist wie in Beispiel 1 praktisch vollständig.

### Beispiel 4:

### Analog Beispiel 1

Zur Flotation werden 2000 g, bezogen auf eine Tonne des Kunststoffgemisches Tetrapropylenglycolmethylether als Schäumer und 1000 g, bezogen auf eine Tonne des Kunststoffgemisches, Sonnenblumenöl verwendet.
Die Trennung in Polyester und Polyvinylchlorid ist wie in Beispiel 1 praktisch vollständig.

## Patentansprüche

1. Verfahren zum Abtrennen von Kunststoffen aus Polyester aus einem Gemisch von Kunststoffen aus Polyester, Polyvinylchlorid und gegebenenfalls anderen Kunststoffen, dadurch gekennzeichnet, daß das Gemisch der Kunststoffe mit einer wäßrig alkalischen Lösung behandelt wird und der Polyester von Polyvinylchlorid und gegebenenfalls anderen Kunststoffen durch Flotation abgetrennt wird.

2. Verfahren nach Anspruch 1, dadurch gekennzeichnet, daß in dem Gemisch von Kunststoffen als Polyester Polyethylenterephthalat, Polybutylenterephthalat, säuremodifizierte Polyester und/oder glykolmodifizierte Polyester enthalten sind.

3. Verfahren nach Anspruch 1 oder 2, dadurch gekennzeichnet, daß in dem Gemisch der Kunststoffe der Anteil Polyester zu Polyvinylchlorid und gegebenenfalls anderen Kunststoffen im Bereich von 1-99 Gew.-% Polyester zu 99-1 Gew.-% Polyvinylchlorid zu 0-98 Gew.-% anderen Kunststoffen beträgt.

4. Verfahren nach Anspruch 1, dadurch gekennzeichnet, daß die wäßrig alkalische Lösung die Lösung eines Erdalkali- oder Alkalioxids, -hydroxids, -carbonats oder -bicarbonats ist.

5. Verfahren nach Anspruch 4, dadurch gekennzeichnet, daß die wäßrig alkalische Lösung eine mindestens 2 gew- %ige, bevorzugt 5 - 15 gew- %ige Lösung ist.

6. Verfahren nach Anspruch 1, dadurch gekennzeichnet, daß die wäßrig alkalische Lösung 1-70 Gew.-%, bevorzugt 5-50 Gew.-%, besonders bevorzugt 10-20 Gew.-%, bezogen auf das Gewicht der wäßrig-alkalischen Lösung, eines organischen Lösungsmittels enthält.

7. Verfahren nach Anspruch 6, dadurch gekennzeichnet, daß als organische Lösungsmittel ein- und mehrwertige Alkohole und/oder Glykolether eingesetzt werden.

8. Verfahren nach einem der Ansprüche 1 bis 7, dadurch gekennzeichnet, daß der Anteil des Gemisches von Kunststoffen in der wäßrig alkalischen Lösung von etwa 1 bis 30 Gewichtsteilen, bevorzugt 15 bis 25 Gewichtsteilen, bezogen auf 100 Gewichtsteile der wäßrig alkalischen Lösung, beträgt.

9. Verfahren nach Anspruch 1, dadurch gekennzeichnet, daß zur Flotation ein Flotationsschäumer oder die Mischung eines Flotationsschäumers und eines Sammlers verwendet werden.

10. Verfahren nach Anspruch 10, dadurch gekennzeichnet, daß als Flotationsschäumer Alkohole, Polyglykole, Polyglykolester oder Alkylpolyglykolether und als Sammler natürliche Öle und mineralische Öle mit einer Kettenlänge von 8 bis 20 Kohlenstoffatomen oder Fettsäuren mit 8 bis 20 Kohlenstoffatomen verwendet werden.

11. Verfahren nach Anspruch 1, dadurch gekennzeichnet, daß bei der Flotation der Polyester als Rückstand verbleibt und das Polyvinylchlorid und gegebenenfalls andere Kunststoffe in flotierter Form gewonnen werden.
